Europäisches Patentamt

European Patent Office

Office européen des brevets

(11) Publication number: **0 023 434**
**A2**

(12) **EUROPEAN PATENT APPLICATION**

(21) Application number: **80302599.8**

(22) Date of filing: **30.07.80**

(51) Int. Cl.³: **B 61 L 27/04**
**G 06 F 15/20, E 21 F 13/00**

(30) Priority: **30.07.79 ZA 793900**

(43) Date of publication of application:
**04.02.81 Bulletin 81/5**

(84) Designated Contracting States:
**DE FR GB NL SE**

(71) Applicant: **Anglo American Corporation of South Africa Limited**
**44 Main Street**
**Johannesburg Transvaal(ZA)**

(72) Inventor: **Parnell, Garland Owen**
**20 Moray Drive**
**Bryanston Ext. 8 Transvaal(ZA)**

(72) Inventor: **Russell, James Robert Lindsay**
**27 Shepherd Avenue Bryanston Manor**
**Randburg Transvaal(ZA)**

(72) Inventor: **Rees, Malcolm Graham**
**268 Bryanston Drive Bryanston**
**Sandton Transvaal(ZA)**

(72) Inventor: **Kriek, Hendrik Sebastian**
**2 Dahlia Road Primrose**
**Germiston Transvaal(ZA)**

(72) Inventor: **Drury, Brian Richard**
**31 Wicklow Avenue Parkview**
**Johannesburg Transvaal(ZA)**

(74) Representative: **Jennings, Guy Kenneth et al,**
**GILL JENNINGS & EVERY 53/64 Chancery Lane**
**London WC2A 1HN(GB)**

(54) **Commodity handling system.**

(57) A system for conveying different commodities such as different types of coal between a number of points, such as mines 10, 12, 14 and silos 34, 36, 38, 40, has a number of different paths linking the points defined by conveyor units. Stacker conveyors 16, 18, 20, 22 are used to deposit coal in different stockpiles and reclaimer conveyors 24, 26, 28, 30, 32 are used to reclaim the coal from the stockpiles. A computer (not shown) is employed which is supplied with information as to which conveyor units are available for conveying and determines an optimum route for a commodity between two points in accordance with the supplied information. The computer also ensures that different commodities are kept separate from one another.

EP 0 023 434 A2

./...

FIG_1

Anglo American Corporation of South Africa Limited

- 1 -

"COMMODITY HANDLING SYSTEM"

THIS invention relates to a system for controlling the handling of different commodities. In particular it relates to a system for controlling the movement of different commodities between a plurality of points.

Modern industrial requirements have generated a need for a system which is able to control the movement of different products between diverse locations. A particular example of this has been brought about in the coal industry which is committed to strong growth in the local and export markets. Most coal mines produce at least two types of coal and in a rich coal field a number of such mines may be clustered fairly closely to one another. If the coal from such mines is processed at a single installation from where it is transmitted to different despatch points then it is necessary to ensure that the different types of coal are kept track of at the installation and are correctly routed to a despatch point. In addition such an installation should make provision for the stockpiling of coal so that a buffer is formed between the producers and the despatch points.

It is an object of the present invention to provide a system which satisfies these requirements.

The invention provides a system for controlling the movement of different commodities between a plurality of points which comprises means linking various of the points on paths along which movement of the commodities is permitted, sensing means to determine which linking means are unavailable for the movement of commodities, and computing means which is responsive to the sensing means to determine a route along available linking means between two selected points over which a given commodity may be moved.

The points may be divided at least into points of origin and points of destination, with the movements of the commodities taking place generally from a point of origin to a point of destination.

However it is within the scope of the invention that the movement of the commodities need not be effected continuously and the system may therefore include storage points to which commodities are moved for indeterminate storage periods.

The linking means may comprise conveyors which move the commodities.

In accordance with the invention the linking means which form a route determined by the computing means are designated as engaged and are not taken account of by the computing means in a subsequent route determination.

The sensing means may monitor the mechanical availability of the conveyor means.

The computing means may be software controlled. This feature enhances the flexibility of the system and permits a route to be optimally determined. A route may be regarded as being "optimal" if the throughput is maximized, or if a minimum number of hardware items are used to define the route. Any other desirable basis for optimization may also be employed.

The invention is further described by way of example with reference to the accompanying drawings in which :
Figure 1 schematically illustrates a system according to the invention for controlling the movement of coal between a number of mines and end points, and

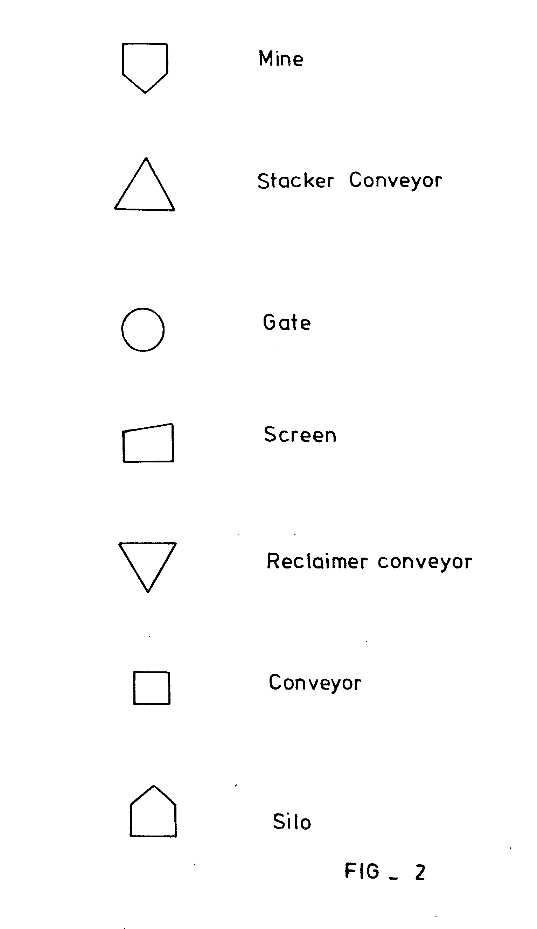

Figure 2 is a legend of the symbols used in Figure 1.

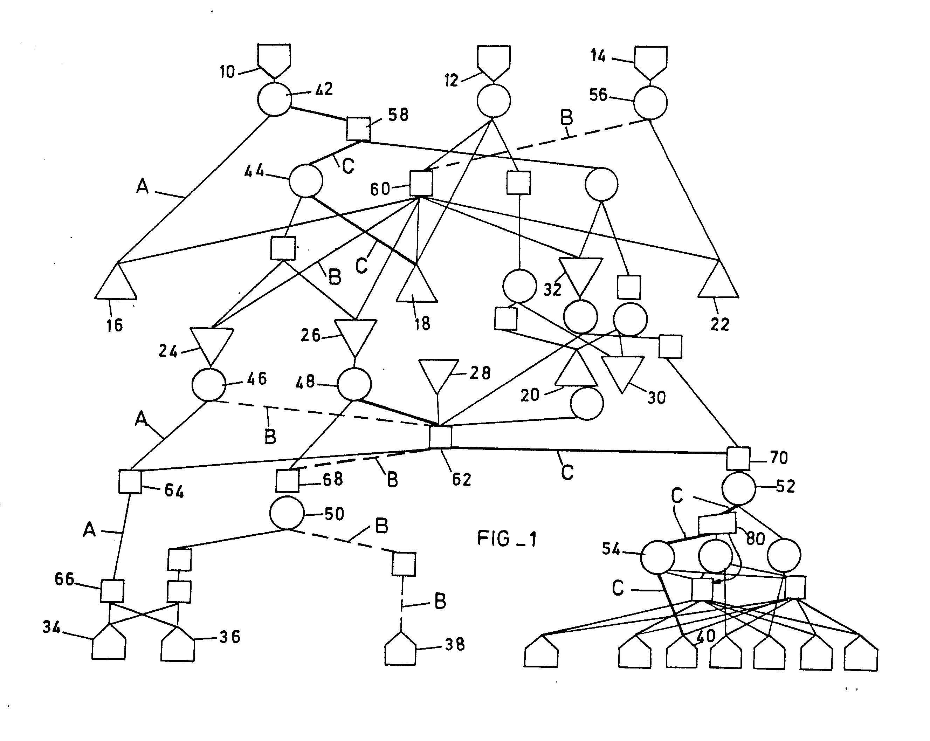

Figure 1 illustrates three mines 10, 12 and 14, stacker conveyors 16, 18, 20 and 22, reclaimer conveyors 24, 26, 28, 30 and 32, and silos 34, 36, 38 and 40. Additional silos are illustrated in Figure 1 but, for the sake of clarity, these have not been numbered.

The mines and the silos are linked to one another by a plurality of gates and conveyors. For the purposes of the ensuing description certain of the gates are marked as follows : 42, 44, 46, 48, 50, 52, 54 and 56, and certain of the conveyors are marked from 58 to 70.

The stacker conveyors 16, 18, 20 and 22 are used to deposit coal, according to coal type, in different stockpiles. The reclaimer conveyors 24, 26 28, 30 and 32 are used to reclaim the coal from the different stockpiles. The reclaimer conveyors can however also be fed directly from associated conveyors.

The mechanical condition and status of each gate, conveyor and stacker or reclaimer conveyor is monitored by means of suitable sensors and the output signals of the sensors which indicate the availability of a particular piece of hardware are applied to a computer, not shown.

The computer is controlled by means of software which it is believed can be written by a skilled programmer with the aid of the present specification and the accompanying drawings. The philosophy employed in the software is to treat the entire coal handling system as a network in which each item of hardware comprises an individual node. The programme takes account of input parameters which interalia designate the types of coal available from each of the mines, the identity of each stockpile and the type of coal which forms each stockpile and the type of coal with which each silo may be filled.

The computer is employed to determine an optimum route through the coal handling system for a given type of coal produced at a particular mine to be transferred to one of the silos. In so doing the computer takes account of the availability of the various conveyors and stacker and reclaimer conveyors. A hardware item is available if it is not in concurrent use for the movement of coal and if it is mechanically sound. Taking these factors into account the system determines an optimum physical route along which the coal may be moved by selecting the minimum number of available hardware items to make up the route. The status of all equipment associated with the route is taken cognisance of in this operation. An operator of the system is then advised of the route particulars and if these are acceptable to the operator the computer is used to start the drives of the various conveyors on the route in the correct sequence. In similar fashion if a hardware item malfunctions during use this is detected by the associated sensor and all hardware items upstream of the failure point are shut down. Similar action is taken when coal is being transferred to a hardware item which is not running.

In a case where a silo is being filled the operator is notified automatically to shut off the feed, either from a mine or a reclaimer conveyor, when there is enough coal in transit on the various conveyors to fill the silo. If the feed is not interrupted the system takes the necessary action by shutting off the feed or by tripping the appropriate belt drive.

In Figure 1 certain coal routes A, B and C have been marked for illustrative purposes. Thus on route A coal produced at the mine 10 is passed through the gate 42 to the stacker conveyor 16 which deposits the coal on a stockpile. This coal may subsequently be removed by the reclaimer conveyor 24 and transferred by means of the conveyors 64 and 66 to either of the silos 34 and 36.

On route B coal produced at the mine 14 is passed by the gate 56 to the conveyor 60. The coal from this conveyor goes directly to the reclaimer conveyor 24 and then through the gate 46 to the conveyors 62 and 68. From the conveyor 68 the coal is passed through a gate 50 to the silo 38.

On route C coal produced at the mine 10 is passed by the gate 42 to the conveyor 58 and then through the gate 44 to the stacker conveyor 18 which deposits the coal on a stockpile. Subsequently the coal is removed from the stockpile by the reclaimer conveyor 26 which passes it through the gate 48 to the conveyors 62 and 70. The coal then passes through
the gate 52, a screen 80 and a gate 54 to the silo 40. It is apparent
that the flow of coal from the various mines or stockpiles to the
stockpiles or silos, respectively, can take place simultaneously on a number of
different routes. In certain instances it may be necessary to reverse
the flow of coal slightly, for example when a silo must be emptied of
unwanted coal. In this event the direction of movement of the conveyors
would be reversed to return the coal to a stockpile through one of the
stacker conveyors.

The integrity of each of the different-coal types is at all times
protected, both at the stock piles and at the silos, for the coal types
and locations thereof are recorded, and the system ensures that mixing
of different coal types does not take place.

CLAIMS:-

1.

A system for controlling the movement of different commodities between a plurality of points which comprises means linking various of the points on paths along which movement of the commodities is permitted, sensing means to determine which linking means are unavailable for the movement of commodities, and computing means which is responsive to the sensing means to determine a route along available linking means between two selected points over which a given commodity may be moved.

2.

A system as claimed in claim 1 in which the points are divided at least into points of origin and points of destination, with the movements of the commodities taking place generally from a point of origin to a point of destination.

3.

A system as claimed in either of claims 1 or 2 in which the linking means comprise conveyers which move the commodities.

4.

A system as claimed in claim 3 in which the linking means which form a route determined by the computing means are designated as engaged and are not taken account of by the computing means in a subsequent route determination.

5.

A system as claimed in either of claims 3 or 4 in which the sensing means monitors the mechanical availability of the conveyor means.

6.

A system as claimed in anyone of the above claims in which the computing means is software controlled.

FIG—1

0023434

2/2

Mine

Stacker Conveyor

Gate

Screen

Reclaimer conveyor

Conveyor

Silo

FIG _ 2